# EUROPÄISCHE PATENTSCHRIFT

(11) **EP 1 919 167 B1**
(45) Veröffentlichungstag und Bekanntmachung des Hinweises auf die Patenterteilung: **05.12.2012**
(21) Anmeldenummer: 07021264.2
(22) Anmeldetag: 31.10.2007
(51) Int. Cl.: H04L 29/12, H04L 12/58, H04W 4/12, H04W 4/20, H04W 88/18

(54) **Übermittlung von Nachrichten in einem Telekommunikationsnetz**
Transmission of messages in a telecommunications network
Transmission des messages dans un réseau de télécommunication

(30) Priorität: 06.11.2006 DE 102006052497
(43) Veröffentlichungstag der Anmeldung: 07.05.2008
(73) Patentinhaber: Vodafone Holding GmbH, 40213 Düsseldorf (DE)
(72) Erfinder: Wortmann, Hubertus, 40764 Langenfeld (DE)
(74) Vertreter: Weisbrodt, Bernd

(56) Entgegenhaltungen:
- US-A1- 2006 183 491
- HASEEB AKHTAR DAVE BROMBAL ANTHONY JONES NORTEL: "New SIP Headers for Reducing SIP Message Size; draft-akhtar-sipping-header-reduction-01.t xt" IETF STANDARD-WORKING-DRAFT, INTERNET ENGINEERING TASK FORCE, IETF, CH, Nr. 1, 10. September 2006 (2006-09-10), XP015046392 ISSN: 0000-0004
- CAMPBELL B ET AL: "Session Initiation Protocol (SIP) Extension for Instant Messaging; rfc3428.txt" IETF STANDARD, INTERNET ENGINEERING TASK FORCE, IETF, CH, Dezember 2002 (2002-12), XP015009171 ISSN: 0000-0003
- ROSENBERG ET AL: "RFC 3261: SIP: Session Initiation Protocol", IETF REQUEST FOR COMMENTS, XX, XX, 1 June 2002 (2002-06-01), pages 1-269, XP002323877,

## Beschreibung

Die vorliegenden Erfindung betrifft ein Verfahren zur Übermittlung von Nachrichten in einem Telekommunikationsnetz, vorzugsweise einem Mobiffunknetz gemäß einem GSM-, GPRS- und/oder UMTS-Funknetzstandard, mittels eines Nachrichtendienstes des Telekommunikationsnetzes, wobei wenigstens ein Netzknoten des Telekommunikationsnetzes für wenigstens einen Nachrichtensender wenigstens eine Auswahlliste bevorzugter Nachrichtenempfänger aufweist, in der für jeden Nachrichtenempfänger wenigstens eine Kontaktinformation des Nachrichtenempfängers in einem Telekommunikationsnetz erfasst ist.

Gegenstand der vorliegenden Erfindung ist ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes zumindest beteiligt ist und welcher für wenigstens einen Nachrichtensender wenigstens eine Auswahlliste bevorzugter Nachrichtenempfänger aufweist, in der für jeden Nachrichtenempfänger wenigstens eine Kontaktinformation des Nachrichtenempfängers in einem Telekommunikationsnetz erfasst ist.

Darüber hinaus betrifft die vorliegende Erfindung ein Verfahren zur Übermittlung von Nachrichten in einem Telekommunikationsnetz, vorzugsweise einem Mobilfunknetz gemäß einem GSM-, GPRS- und/oder UMTS-Funknetzstandard, wobei ein in dem Telekommunikationsnetz betreibbares Endgerät eine Nachricht an das Telekommunikationsnetz sendet, welche wenigstens eine Kontaktinformation wenigstens eines Nachrichtenempfängers im Telekommunikationsnetz und einen Nachrichteninhalt aufweist.

Im Stand der Technik sind verschiedene Systeme, Verfahren und Vorrichtungen zur Übermittlung von Nachrichten in einem Telekommunikationsnetz, insbesondere einem Mobilfunknetz gemäß einem GSM- (GSM: Global System Mobile), GPRS- (GPRS: General Packet Radio Service) und/oder UMTS-Funknetzstandard (UMTS: Universal Mobile Telecommunications System) bekannt.

Ein direkter Austausch von Nachrichten zwischen Kommunikationspartnern in einem Telekommunikationsnetz ist insbesondere im Zusammenhang mit dem Internet als Telekommunikationsnetz unter dem Begriff "Instant Messaging" bekannt. Dabei handelt es sich um einen Dienst des Telekommunikationsnetzes, welche es Teilnehmern in Echtzeit ermöglicht miteinander zu kommunizieren, so dass eine sofortige Nachrichtenübermittlung (Instant Messaging (Nachrichtensofortversand)) realisiert wird. Derartige Systeme Verfahren und Vorrichtungen sind beispielsweise seitens der DE 102 53 687 A1 beschrieben.

Mit Instant Messaging unter Nutzung des Session Initiation Protocol (SIP) setzt sich die Veröffentlichung von Campbell et al. (Campbell et al.: "Session Initiation Protocol (SIP) Extension for Instant Messaging; rfc3428.txt"; IETF Standard, Internet Engineering Task Force, IETF, CH, Dezember 2002, XP015009171 ISSN: 0000-0003) auseinander.

Die Veröffentlichung von Akhtar et al. (Haseeb Akhtar, Dave Brombal, Anthony Jones: "New SIP Headers for Reducing SIP Message Size; draft-akhtar-sipping-header-reduction-01.txt"; IETF Standard-Working-Draft, Internet Engineering Task Force, IETF, CH, Nr. 1, 10. September 2006, XP015046392 ISSN: 0000-0004) schlägt eine Modifizierung des SIP-Headers vor, um die Größe einer SIP-Nachricht zu reduzieren und dadurch die Verbindungsaufbauzeit zu verkürzen.

Ein Verfahren betreffend push-to-talk (PTT) für einen Austausch von Nachrichten ist aus der US 2006/0183491 A1 bekannt, welche vorschlägt, für eine Inhibierung eines push-to-talk-Anrufs erforderliche Signalisierungsnachrichten zu modifizieren, um deren Größe und somit deren Einfluss auf ein PTT-System zu verringern.

Die bisher bekannte Übermittlung von Nachrichten zum Austausch derselben zwischen Kommunikationspartnern in Telekommunikationsnetzen, insbesondere Mobilfunknetzen, ist hinsichtlich der zur Verfügung stehenden Funktionalitäten eingeschränkt, insbesondere hinsichtlich der seitens der Mobilfunknetze zur Verfügung stehenden Nachrichtendienste zur Übertragung von Nachrichten über das Mobitfunknetz, wie beispielsweise mittels SMS (SMS: Short Message Service) und/oder MMS (MMS: Multimedia Messaging Service).

In Anbetracht dieses Standes der Technik liegt der vorliegenden Erfindung die Aufgabe zugrunde, die Übermittlung von Nachrichten in einem Telekommunikationsnetz der eingangs genannten Art zu verbessern, insbesondere hinsichtlich der Funktionalitäten zum Austausch von Nachrichten zwischen Kommunikationspartnern.

Technische Lösungen für die Aufgabe ergeben sich aus den unabhängigen Ansprüchen. Dabei werden mit den unabhängigen Ansprüchen 1 und 23 Verfahren zur Übermittlung von Nachrichten in Telekommunikationsnetzen vorgeschlagen. Mit dem unabhängigen Anspruch 12 wird zudem ein an der Übermittlung von Nachrichten in Telekommunikationsnetzen beteiligter Netzknoten vorgeschlagen. H Vorteilhafte Weiterbildungen der vorgeschlagenen Lösungen ergeben sich aus den abhängigen Ansprüchen.

Mit der Erfindung wird ein Endgerät zur Übermittlung von Nachrichten in einem Telekommunikationsnetz, vorzugsweise einem Mobilfunknetz gemäß einem GSM-, GPRS- und/oder UMTS-Funknetzstandard, mittels eines Nachrichtendienstes des Telekommunikationsnetzes, welches wenigstens eine Auswahlliste bevorzugter Nachrichtenempfänger aufweist, in der für jeden Nachrichtenempfänger wenigstens eine Kontaktinformation des Nachrichtenempfängers im Telekommunikationsnetz erfasst ist, offenbart, welches dadurch gekennzeichnet ist, dass die Kontaktinformation zur Nachrichtenübermittlung nutzbar ist und aus einer Information zur Adressierung des Nachrichtendienstes des Telekommunikationsnetzes und einer indizierten Information anhand der der Nachrichtempfänger bestimmbar ist, besteht.

Der Erfindung liegt die Erkenntnis zugrunde, dass durch Nutzung einer erfindungsgemäßen Kontaktinformation, bestehend aus einer Information zur Adressierung des Nachrichtendienstes des Telekommunikationsnetzes und einer die Bestimmung des Nachrichtenempfängers ermöglichenden indizierten Information, auf einfache Art und Weise eine verbesserte Nachrichtenübermittlung, insbesondere hinsichtlich des Austausches von Nachrichten zwischen Kommunikationspartnern realisierbar ist. Die eine Adressierungsinformation bezüglich des zu verwendenden Nachrichtendienstes als auch eine Information bezüglich des Nachrichtenempfängers aufweisende Kontaktinformation stellt eine besonders einfache Möglichkeit zur Realisierung eines direkten Austausches von Nachrichten zwischen Kommunikationspartnern, insbesondere für einen Instant-Messaging-Dienst in einem Telekommunikationsnetz bereit. Durch die Verwendung einer indizierten Information bezüglich des Nachrichtenempfängers ist eine Bestimmung des Nachrichtenempfängers auf besonders einfache Art und Weise anhand der indizierten Information selbst realisierbar. Vorteilhafterweise müssen so keine weiteren Informationen bezüglich des Nachrichtenempfängers im Rahmen der Nachrichtenübermittlung in dem Telekommunikationsnetz verwendet werden, wodurch sich die Nachrichtenübermittlung zumindest adressierungsseitig weiter vereinfacht, insbesondere da hierzu weniger Daten übermittelt werden müssen.

In einer vorteilhaften Ausgestaltung der Erfindung besteht die Kontaktinformation insgesamt aus wenigstens zwei Zeichen, wenigstens einem Zeichen für die Adressierungsinformation und wenigstens einem Zeichen für die Indizierungsinformation. Eine weitere Ausgestaltung der Erfindung sieht vor, dass die Kontaktinformation aus vier Zeichen besteht, zwei Zeichen für die Adressierungsinformation und zwei Zeichen für die Indizierungsinformation. In einer weiteren Ausgestaltung der Erfindung sind die Kontaktinformation, die Adressierungsinformation und/oder die Indizierungsinformation aus arabischen Ziffern zusammengesetzt. Eine weitere Ausgestaltung der Erfindung ist gekennzeichnet durch Indizierungsinformationen fortlaufender Zahlen in der Auswahlliste. Die Nutzung von Indizierungsinformationen fortlaufender Zahlen ermöglicht dabei eine Identifizierung der jeweiligen Nachrichtenempfänger aufgrund der mdentifizierungsinformation selbst, die entsprechend der fortlaufenden Zahl eine bestimmte Position in der Auswahlliste aufweist.

Eine weitere vorteilhafte Ausgestaltung der Erfindung sieht die Verwendung einer die Auswahlliste verwaltenden Speichereinheit seitens des erfindungsgemäßen Endgerätes vor. Die Verwaltung der Auswahlliste seitens des Endgerätes erfolgt dabei durch Speicherung der Kontaktinformation beziehungsweise durch Speicherung der Indizierungsinformation der Kontaktinformation seitens entsprechender Einträge von bevorzugten Nachrichtenempfängern in der Auswahlliste. Die endgerätseitige Auswahlliste stellt insofern im Sinne der vorliegenden Erfindung eine Information in einem Nachrichtenempfänger verwaltenden Adressbuch seitens des Endgerätes dar. Die Speichereinheit des Endgerätes ist vorteilhafterweise seitens des Endgerätes selbst gegeben, ein mit dem Endgerät verwendbares Mobiffunkteilnehmer-Identifikations-Modul (SIM-Karte) und/oder ein mit dem Endgerät verwendbares austauschbares Speichermittel, beispielsweise in Form einer sogenannten SD-Speicherkarte oder dergleichen Speicherkarte.

In einer weiteren vorteilhaften Ausgestaltung der Erfindung ist das Endgerät gekennzeichnet durch eine die Auswahlliste zur Nachrichtenübermittlung nutzende Nachrichtenverarbeitungseinheit, aufweisend einen Prozessor, wenigstens eine Speichereinheit, wenigstens eine Anzeige und eine Anwenderschnittstelle. Zur Nachrichtenübermittlung wird dabei von dem Prozessor eine Steuerung und/oder Kontrolle bezüglich des Nachrichtenaustausches zwischen der Anwenderschnittstelle, der Speichereinheit und/oder der Anzeige realisiert. Dabei ist durch die Anwenderschnittstelle vorteilhafterweise die Nutzung einer sogenannten Editor Anwendung seitens des Endgerätes zur Erstellung von Nachrichten ermöglicht.

Mit der vorliegenden Erfindung wird ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes zumindest beteiligt ist und welcher für wenigstens einen Nachrichtensender wenigstens eine Auswahlliste bevorzugter Nachrichtenempfänger aufweist, in der für jeden Nachrichtenempfänger wenigstens eine Kontaktinformation des Nachrichtenempfängers in einem Telekommunikationsnetz erfasst ist, offenbart, welcher dadurch gekennzeichnet ist, dass die Kontaktinformation zur Nachrichtenübermittlung an den Nachrichtenempfänger im Telekommunikationsnetz nutzbar ist und indiziert oder mit einer indizierten Information in der Auswahlliste erfasst ist.

Vorteilhafterweise ist die Indizierung durch die Position des Eintrags der Kontaktinformation in der Auswahlliste gegeben.

Vorteilhafterweise besteht die Indizierungsinformation aus wenigstens einem Zeichen. In einer weiteren vorteilhaften Ausgestaltung der Erfindung besteht die Indizierungsinformation aus zwei Zeichen. Vorteilhafterweise ist die Indizierungsinformation aus arabischen Ziffern zusammengesetzt. Eine weitere Ausgestaltung der Erfindung ist gekennzeichnet durch Indizierungsinformationen fortlaufender Zahlen.

Eine vorteilhafte Ausgestaltung der Erfindung ist dadurch gekennzeichnet, dass die Kontaktinformation wenigstens die Rufnummer, vorzugsweise die MSISDN (MSISDN: Mobile Subscriber ISDN; ISDN: Integrated Service Digital Network) des Nachrichtenempfängers im Telekommunikationsnetz ist. Die erfindungsgemäße Nutzung der MSISDN ist vorteilhafterweise für die Nutzung eines Nachrichtenempfängers als Teilnehmer eines Mobilfunknetzes vorgesehen. Eine weitere vorteilhafte Ausgestaltung der Erfindung sieht die Verwendung weiterer Kontaktinformationen eines Nachrichtenempfängers in einem anderen Telekommunikationsnetz vor, so kann der Nachrichtenempfänger beispielsweise auch Teilnehmer eines anderen Instant-Messaging-Dienstes, beispielsweise MSN-Messenger (MSN: Microsoft Network) oder Yahoo-Messenger sein. Erfindungsgemäß nutzt der entsprechende Instant-Messaging-Dienst vorteilhafterweise entsprechende mit dem erfindungsgemäßen Telekommunikationsnetz des Netzknotens verbundene Einrichtungen, vorzugsweise sogenannte Interworking-Gateways. Im Falle eines entsprechenden Instant-Messaging-Dienstes, wie MSN, liegt seitens des entsprechenden lristant-Messaging-Servers dann anstelle der MSISDN als Kontaktinformation eine E-Mail-Adresse oder dergleichen Kontaktinformation des jeweiligen Instant-Messaging-Dienstes vor, vorzugsweise eine E-Mail-Adresse gemäß RFC 822. Die entsprechende Kontaktinformation erlaubt dann ein Weiterleiten beziehungsweise Durchstellen, ein sogenanntes Routing, der zu übermittelnden Nachricht über die entsprechende Kopplungseinrichtung, vorliegend insbesondere ein Gateway der dergleichen Einrichtung eines Telekommunikationsnetzes.

In einer weiteren vorteilhaften Ausgestaltung der Erfindung ist die wenigstens eine Auswahlliste des Nachrichtensenders anhand der Rufnummer des Nachrichtensenders im Telekommunikationsnetz, vorzugsweise anhand der MSISDN des Nachrichtensenders im Mobilfunknetz, bestimmbar. Netzknotenseitig wird so anhand der Rufnummer des Nachrichtensenders im Telekommunikationsnetz die zu verwendende Auswahlliste für bevorzugte Nachrichtenempfänger von Nachrichten des Nachrichtensenders ausgewählt. Bei Vorhandensein von mehreren bevorzugten Auswahllisten des Nachrichtensenders wird vorteilhafterweise eine Auswahl der jeweiligen Auswahlliste unter Verwendung der Rufnummer des Nachrichtensenders im Telekommunikationsnetz und wenigstens einer weiteren dem Nachrichtensender zugeordneten beziehungsweise von diesem eingerichteten Kennung realisiert.

Eine weitere Ausgestaltung der Erfindung ist gekennzeichnet durch eine die Auswahlliste verwaltende Speichereinheit seitens des Netzknotens.

Eine weitere vorteilhafte Ausgestaltung der Erfindung ist gekennzeichnet durch eine die Auswahlliste zur Nachrichtenübermittlung nutzende Nachrichtenverarbeitungseinheit, aufweisend einen Prozessor und wenigstens eine Speichereinheit.

In einer weiteren besonders vorteilhaften Ausgestaltung der Erfindung ist der erfindungsgemäße Netzknoten eine Vermittlungseinrichtung für den Nachrichtendienst des Telekommunikationsnetzes, vorzugsweise ein SMSC (SMSC: Short Message Service Center) eines Mobilfunknetzes.

Eine weitere vorteilhafte Ausgestaltung der Erfindung sieht vor, dass der Netzknoten eine für den Nachrichtendienst des Telekommunikationsnetzes eingerichtete Servereinrichtung ist, vorzugsweise eine Servereinrichtung für Instant Messaging, welche den SMS- und/oder OMA-IMPS-Standard.

Mit der vorliegenden Erfindung wird ferner ein Verfahren zur Übermittlung von Nachrichten in einem Telekommunikationsnetz, vorzugsweise einem Mobilfunknetz gemäß einem GSM-, GPRS- und/oder UMTS-Funknetzstandard, mittels eines Nachrichtendienstes des Telekommunikationsnetzes, wobei ein in dem Telekommunikationsnetz betrebbares Endgerät eine Nachricht an das Telekommunikationsnetz sendet, welche wenigstens eine Kontaktinformation wenigstens eines Nachrichtenempfängers im Telekommunikationsnetz und einen Nachrichteninhalt aufweist, offenbart, welches dadurch gekennzeichnet ist, dass das Endgerät wenigstens eine den Nachrichtensender im Telekommunikationsnetz eindeutig identifizierende Information, die wenigstens eine Kontaktinformation wenigstens eines Nachrichtenempfängers in einem Telekommunikationsnetz und den Nachrichteninhait an das Telekommunikationsnetz sendet, wobei die Kontaktinformation aus einer Information zur Adressierung des Nachrichtendienstes des Telekommunikationsnetzes und einer indizierten Information, anhand der der Nachrichtenempfänger identifizierbar ist, besteht.

Gemäß einer weiteren Ausgestaltung der Erfindung besteht die Kontaktinformation insgesamt aus wenigstens zwei Zeichen, wenigstens einem Zeichen für die Adressierungsinformation und wenigstens einem Zeichen für die Indizierungsinformation. Eine weitere bevorzugte Ausgestaltung der Erfindung sieht vor, dass die Kontak6nformation aus mindestens vier Zeichen besteht, mindestens zwei Zeichen für die Adressierungsinformation und mindestens zwei Zeichen für die Indizierungsinformation. Die Nutzung von vier Zeichen für die Kontaktinformation ermöglicht zum einen die Nutzung verschiedener Dienste durch die zwei Zeichen der Adressierungsinformation als auch die Nutzung von mehreren Nachrichtenempfängern durch die lndizierungsinforrnation bestehend aus zwei Zeichen. Insgesamt sind so mit jeder Auswahlliste jeweils bis zu einhundert Personen als Nachrichtenempfänger indizierbar. Ferner sind so bis zu einhundert Dienste adressierbar. Weitere Kombinationen der Anzahl von Ziffern für die Adressierungsinformation und/oder die Indizierungsinformation sind je nach Bedarf vorteilhafterweise zusammenstellbar. Mit drei Zeichen wären vorteilhafterweise beispielsweise bei Bedarf bis zu eintausend Personen adressierbar. Vorteilhafterweise wird die Kontaktinformation, die Adressierungsinformation und/oder die Indizierungsinformation aus arabischen Ziffern zusammengesetzt.

Eine weitere vorteilhafte Ausgestaltung der Erfindung ist dadurch gekennzeichnet, dass die den Nachrichtensender im Telekommunikationsnetz eindeutig identifizierende Information die Rufnummer des Nachrichtensenders im Telekommunikationsnetz ist, vorzugsweise die MSISDN in einem Mobilfunknetz. Ferner ist die Nutzung einer E-Mail-Adresse im Internet als Telekommunikationsnetz im Zusammenhang mit der Nutzung von weiteren Instant-Messaging-Diensten als eindeutig identifizierende Information des Nachrichtensenders im Telekommunikationsnetz vorgesehen.

Mit der Erfindung wird ferner ein Verfahren zur Übermittlung von Nachrichten in einem Telekommunikationsnetz, vorzugsweise einem Mobilfunknetz gemäß einem GSM-, GPRS und/oder UMTS-Funknetzstandard, mittels eines Nachrichtensdienstes des Telekommunikationsnetzes, wobei wenigstens ein Netzknoten des Telekommunikationsnetzes für wenigstens einen Nachrichtensender wenigstens eine Auswahlliste bevorzugter Nachrichtenempfänger aufweist, in der für jeden Nachrichtenempfänger wenigstens eine Kontaktinformation des Nachrichtenempfängers im Telekommunikationsnetz erfasst ist, vorgeschlagen, wobei der Netzknoten ein Nachricht empfängt, welche wenigstens eine den Nachrichtensender im Telekommunikationsnetz eindeutig identifizierende Information, eine Information zur Adressierung des Nachrichtendienstes des Telekommunikationsnetzes und eine indizierte Information, anhand der der Nachrichtenempfänger bestimmbar ist, aufweist, wobei seitens des Netzknotens anhand der Adressierungsinformation der Nachrichtendienst für die Nachrichtenübertragung ausgewählt wird, anhand der den Nachrichtensender im Telekommunikationsnetz identifizierenden Information die Auswahlliste bevorzugter Nachrichtenempfänger ausgewählt wird, anhand der Indizierungsinformation aus der Auswahlliste entsprechend der Indizierung die Kontaktinformation des Nachrichtenempfängers im Telekommunikationsnetz bestimmt wird und der Netzknoten wenigstens den Nachrichteninhalt an den bestimmten Nachrichtenempfänger sendet.

Eine weitere vorteilhafte Ausgestaltung der Erfindung sieht vor, dass der Netzknoten zusätzlich zum Nachrichteninhalt die den Nachrichtensender im Telekommunikationsnetz identifizierende Information an den bestimmten Nachrichtenempfänger sendet.

Vorteilhafterweise ist die Kontaktinformation eine den Nachrichtenempfänger im Telekommunikationsnetz eindeutig identifizierende Information, vorzugsweise die Rufnummer des Nachrichtenempfängers im Telekommunikationsnetz, besonders bevorzugt die sogenannte MSISDN in einem Mobilfunknetz.

Eine weitere Ausgestaltung der Erfindung sieht vor, dass die Adressierungsinformation und die Indizierungsinformation jeweils aus wenigstens einem Zeichen bestehen. Eine bevorzugte Ausgestaltung sieht mindestens zwei Zeichen für die Adressierungsinformation und mindestens zwei Zeichen für die Indizierungsinformation vor. Vorteilhafterweise sind die Adressierungsinformation und/oder die Indizierungsinformation aus arabischen Ziffern zusammengesetzt. Eine weitere Ausgestaltung der Erfindung ist gekennzeichnet durch Indizierungsinformationen fortlaufender Zahlen in der Auswahlliste.

Eine weitere besonders vorteilhafte Ausgestaltung der Erfindung ist dadurch gekennzeichnet, dass seitens des Telekommunikationsnetzes wenigstens eine Einrichtung vorgesehen ist, welche wenigstens einen Erreichbarkeitszustand wenigstens eines bevorzugten Nachrichtenempfängers der wenigstens einen Auswahlliste im Telekommunikationsnetz erfasst. Durch die Berücksichtigung beziehungsweise Erfassung eines Erreichbarkeitszustandes im Rahmen eines erfindungsgemäßen Verfahrens ist die erfindungsgemäße Nachrichtenübermittlung weiter verbesserbar und insbesondere hinsichtlich ihrer Funktionalitäten weiter steigerbar. So können insbesondere die an der Nachrichtenübermittlung beteiligten Kommunikationspartner erkennen und/oder sonst wie signalisiert bekommen, ob der jeweils andere Kommunikationspartner derzeit erreichbar ist. Eine weitere Ausgestaltung der Erfindung sieht vor, dass erkennbar und/oder signalisierbar ist, auf welche Art und Weise der jeweils andere Kommunikationspartner erreichbar ist, beispielsweise bei Aufenthalt in einem Mobilfunknetz oder einem anderen Telekommunikationsnetz, insbesondere im Internet als Telekommunikationsnetz.

Eine weitere vorteilhafte Ausgestaltung der Erfindung sieht vor, dass der wenigstens eine Erreichbarkeitszustand des wenigstens einen bevorzugten Nachrichtenempfängers der wenigstens einen Auswahlliste seitens des Endgerätes des Nachrichtensenders signalisiert wird, vorzugsweise mit und/oder in der Auswahlliste, besonders bevorzugt mit einem Namen und/oder einem Bild oder Foto des jeweiligen Nachrichtenempfängers.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig.1: in einer schematischen Übersichtdarstellung die Anwendung einer erfindungsgemäßen Übermittlung von Nachrichten in einem System von Telekommunikationsnetzen;
- Fig. 2: im Detail ein Ausführungsbeispiel von an einer erfindungsgemäßen Übermittlung von Nachrichten in einem System von Telekommunikationsnetzen beteiligten Einrichtungen von zwei Telekommunikationsnetzen und
- Fig. 3: in einer schematischen Prinzipdarstellung eine erfindungsgemäße Übermittlung von Nachrichten in einem Telekommunikationsnetz mit erfindungsgemäßen Endgeräten und einem erfindungsgemäßen Netzknoten des Telekommunikationsnetzes.

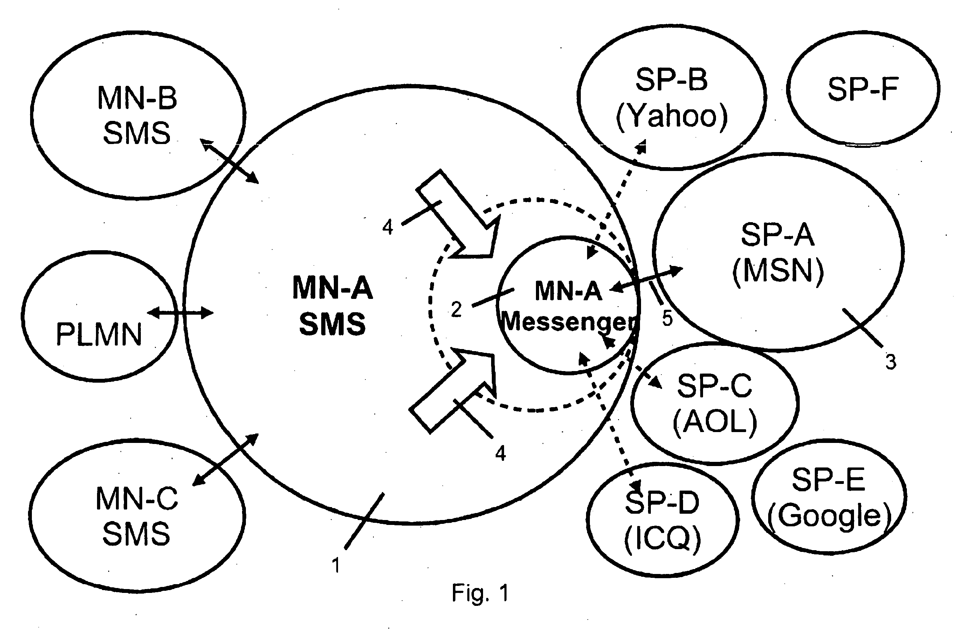

Fig. 1 zeigt ein Mobilfunknetz 1 eines ersten Mobilfunknetzbetreibers MN-A zur Übermittlung von Nachrichten in dem Mobilfunknetz 1, vorliegend mittels SMS als Nachrichtendienst des Mobilfunknetzes 1. Das Mobilfunknetz 1 des Mobilfunknetzbetreibers MN-A ist zum einen mit weiteren den Nachrichtendienst SMS nutzenden Mobilfunknetzen von Mobilfunknetzbetreibern MN-B und MN-C verbunden. Darüber hinaus ist das Mobilfunknetz 1 des Mobilfunknetzbetreibers MN-A mit weiteren öffentlichen landgestützten Mobilfunknetzen, sogenannten PLMNs (PLMN: Public Land Mobile Network), zur Nutzung von entsprechenden Nachrichtendiensten verbunden.

Seitens des Mobilfunknetzes 1 des Mobilfunknetzbetreibers MN-A ist ein sogenannter Nachrichtensofortversanddienst (Instant-Messaging-Service) eingerichtet, welcher in Fig. 1 symbolisch durch den mit 2 gekennzeichneten Kreis dargestellt ist. Der Nachrichtensofortversanddienst 2 des Mobilfunknetzes 1 ermöglicht es Teilnehmern des Mobilfunknetzes 1 unter Nutzung des Nachrichtendienstes SMS des Mobilfunknetzes 1 eine erfindungsgemäße Nachrichtenübermittlung unter Nutzung von aus einer Information zur Adressierung des Nachrichtendienstes des Mobilfunknetzes 1 und einer indizierten Information, anhand der der Nachrichtenempfänger bestimmbar ist, bestehenden Kontaktinformation durchzuführen. An einer entsprechenden Nachrichtenübermittlung sind dabei seitens des Mobilfunknetzes 1 betreibbare mobile Endgeräte als auch entsprechend ausgebildete und/oder eingerichtete Netzknoten, welche das Mobilfunknetz 1 des Mobilfunknetzbetreibers MN-A ausbilden, beteiligt. In Fig. 1 ist eine entsprechende Nachrichtenübermittlung aus dem Mobilfunknetz 1 des Mobilfunknetzbetreibers MN-A von entsprechenden mobilen Endgeräten symbolisch durch die mit dem Bezugszeichen 4 versehenen Pfeile dargestellt. Dabei senden mobile Endgeräte entsprechend zu übermittelnde Nachrichten unter Nutzung der Kontaktinformation bestehend aus einer Adressierungsinformation und einer indizierten Information an einen entsprechenden Netzknoten zur Realisierung eines erfindungsgemäßen Nachrichtensofortversanddienstes 2.

Seitens des Netzknotens sind zur Realisierung des Nachrichtensofortversanddienstes 2 in zu der jeweiligen Rufnummer eines mobilen Teilnehmers im Mobilfunknetz 1 wenigstens eine Auswahlliste bevorzugter Nachrichtenempfänger erfasst, welche wenigstens eine Kontaktinformation eines jeden Nachrichtenempfängers des jeweiligen mobilen Endgerätes in indizierter Form aufweist.

Der erfindungsgemäß realisierte Nachrichtensofortversanddienst 2 mittels Netzknoten und Endgeräten des Mobilfunknetzes 1 ist, wie in Fig. 1 symbolisch dargestellt, über entsprechende Schnittstellen mit weiteren Nachrichtenversanddiensten anderer Telekommunikationsnetze, vorliegend insbesondere von Diensteanbietern (Service-Providern) SP-A, SP-B, SP-C und SP-D angebotenen Nachrichtendiensten über entsprechende Schnittstellen verbunden. Fig. 1 zeigt beispielhaft weitere, nicht mit dem Nachrichtensofortversanddienst 2 des Mobilfunknetzes 1 verbindbare beziehungsweise verbundene Nachrichtenversanddienste von anderen Service-Providern SP-E und SP-F weiterer Telekommunikationsnetze. Die Service-Provider SP-A, SP-B und SP-C, SP-D, SP-E und SP-F nutzen vorliegend als Telekommunikationsnetz das Internet und dessen standardisierte Verfahren und Protokolle zum Austausch von Daten und/oder Sprache.

Eine von einem mobilen Endgerät im Mobilfunknetz 1 übermittelte Nachricht ist so über den Nachrichtensofortversanddienst 2 des Mobilfunknetzes 1 über entsprechende Nachrichtenversanddienste der Service-Provider SP-A, SP-B, SP-C und/oder SP-D unter Nutzung entsprechender Kontaktinformationen der entsprechenden Telekommunikationsnetze der Service-Provider SP-A, SP-B, SP-C und/oder SP-D übermittelbar. Gleiches gilt für eine Nachrichtenübermittlung aus einem der Telekommunikationsnetze, vorliegend also dem Internet, über Nachrichtenversanddienste der Service-Provider (Diensteanbieter) SP-A, SP-B, SP-C und/oder SP-D in das Mobilfunknetz 1 und/oder über das Mobilfunknetz 1 in andere Mobilfunknetze, vorliegend beispielsweise den Mobilfunknetzen der Mobilfunknetzbetreiber MN-B, MN-C oder dergleichen weiteren Netze, insbesondere einem PLMN.

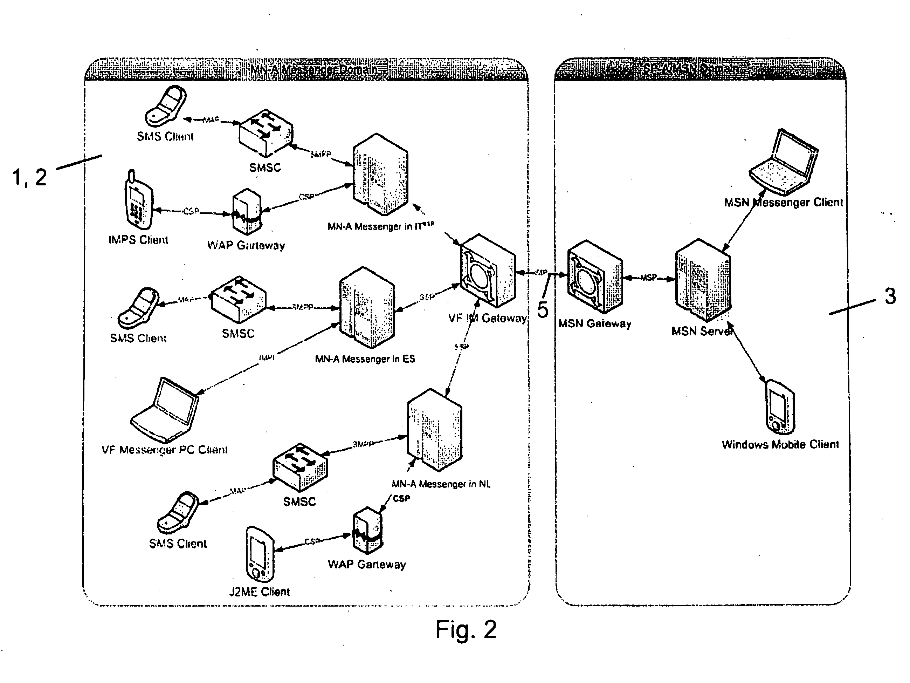

Fig. 2 zeigt im Detail die an einer entsprechenden erfindungsgemäßen Nachrichtenübermittlung seitens des Mobilfunknetzes 1 mit dem Nachrichtensofortversanddienst 2 beteiligten Einrichtungen und/oder Endgeräte beziehungsweise Netzknoten des Mobilfunknetzes 1 auf der einen Seite und die entsprechenden Einrichtungen und/oder Endgeräte einer entsprechenden Übermittlung seitens eines das Internet als Telekommunikationsnetz nutzenden Nachrichtenversanddienstes (Instant-Messaging-Dienst; MSN) eines weiteren Diensteanbieters 3, vorliegend dem Diensteanbieter SP-A.

In Abhängigkeit der jeweils genutzten Endgeräte erfolgt die Nachrichtenübermittlung von dem Mobilfunknetz 1 in das Telekommunikationsnetz 3 beziehungsweise an den Instant-Messaging-Dienst (MSN) des Diensteanbieters SP-A über entsprechende Vermittlungseinrichtungen, vorliegend beispielsweise dem sogenannten SMSC und/oder einem WAP-Gateway seitens des Mobilfunknetzes 1 oder einer entsprechenden Servereinrichtung seitens des Diensteanbieters 3 unter Nutzung der jeweiligen Protokolle, vorliegend SMPP, IMPS- CSP seitens des Mobilfunknetzes 1. Dabei werden seitens des Mobilfunknetzes 1 unter Nutzung entsprechender Dienste entsprechende seitens des Mobilfunknetzes 1 eingerichtete Einrichtungen und/oder Gateways zur erfindungsgemäßen Nachrichtenübermittlung in das weitere Telekommunikationsnetz 3 verwendet. Entsprechende Einrichtungen sind seitens des Telekommunikationsnetzes 3 beziehungsweise des entsprechenden Nachrichtenversanddienstes (Instant-Messaging-Dienst; MSN) seitens des Netzes des Diensteanbieters SP-A für die Nachrichtenübermittlung. Seitens des Telekommunikationsnetzes 3 des Diensteanbieters SP-A sind entsprechende Servereinrichtungen und Gateways eingerichtet, welche ebenfalls entsprechend dem Nachrichtenversanddienst (Instant-Messaging-Dienst; MSN) des Diensteanbieters SP-A eingerichtete Protokolle verwenden. Die Nachrichtenübermittlung von dem Mobilfunknetz 1 in das Telekommunikationsnetz 3 und umgekehrt erfolgt dabei über die entsprechend miteinander verbundenen Gateways der beiden Netze. Eine entsprechende Verbindung bzw. Kopplung ist in Fig. 2 durch den symbolisch mit dem Bezugszeichen 5 versehenen Doppelpfeil gekennzeichnet.

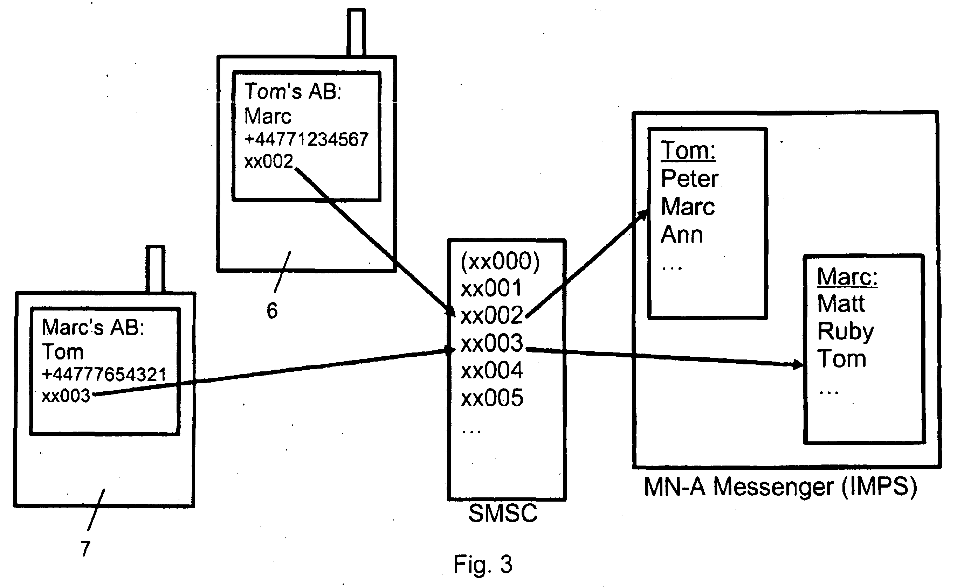

Fig. 3 zeigt zwei in einem Mobilfunknetz 1 betreibbare mobile Endgeräte, vorliegend das mobile Endgerät 6 von "Tom" und das mobile Endgerät 7 von "Marc". In dem mobilen Endgerät 6 von "Tom" ist "Marc" in einer Auswahlliste bevorzugter Nachrichtenempfänger erfasst. Dabei ist zu dem Eintrag "Marc" in dem mobilen Endgerät 6 von "Tom" neben dem Namen von "Marc" und dessen Mobilfunknetzrufnummer (MSISDN) "+44771234567" eine aus fünf Zeichen bestehende Kontaktinformation "xx002" erfasst. Die dabei hier verwendete Ziffernfolge "xx" stellt einen Platzhalter dar. Aus Kompatibilitätsgründen mit dem SMS-Dienst werden hier anstelle von "xx" Ziffern verwendet, beispielsweise "88" oder dergleichen. Die Kontaktinformation "xx002" signalisiert durch die ersten beiden Zeichen "xx" den für die Nachrichtenübermittlung mit der Kontaktinformation "xx002" zu verwendenden Nachrichtendienst des Mobilfunknetzes. Die verbleibenden drei Zeichen "002" geben indiziert eine Information bezüglich des für den entsprechenden Nachrichtendienst vorgesehenen Nachrichtenempfängers wieder. Die Information bezüglich des Nachrichtenempfängers ist dabei als indizierte Ziffernfolge fortlaufender Ziffern ausgebildet. Seitens des mobilen Endgerätes 7 von "Marc" ist vorliegend in einer Auswahlliste bevorzugter Nachrichtenempfänger "Tom" als Nachrichtenempfänger mit seinem Namen, seiner Mobilfunknetzrufnummer "+44777654321" sowie einer entsprechenden Kontaktinformation "xx003" erfasst. Die Kontaktinformation "xx003" ist dabei ebenfalls zur Nutzung einer Nachrichtenübermittlung mittels eines Nachrichtendienstes des Mobilfunknetzes ausgebildet. Der entsprechende Nachrichtendienst wird vorliegend durch die ersten zwei Zeichen "xx" der Kontaktinformation "xx003" ausgewählt und signalisiert. Die indizierte Information zur Bestimmung des Nachrichtenempfängers "003" seitens des mobilen Endgerätes 7 von "Marc" ist ebenfalls indiziert ausgebildet.

Die indizierte Information der Nachrichtenempfänger, vorliegend die "002" für "Marc" seitens des mobilen Endgerätes 6 von "Tom" und die "003" für "Tom" seitens des mobilen Endgerätes 7 von "Marc" zeigen an, dass "Marc" in der Auswahlliste von "Tom" als zweiter Eintrag und "Tom" in der Auswahlliste von "Marc" als dritter Eintrag erfasst sind. Entsprechende Auswahllisten mit indizierten Einträgen sind seitens eines für den Nachrichtensofortversand 2 eingerichteten und/oder ausgebildeten Netzknotens des Mobilfunknetzes 1 für die jeweiligen Mobilfunkteilnehmer, vorliegend also dem mobilen Endgerät 6 von "Tom" beziehungsweise dem mobilen Endgerät 7 von "Marc" erfasst. In der Auswahlliste von "Tom" sind in indizierter Reihenfolge an Position 1 "Peter", an Position 2 "Marc" und an Position 3 "Ann" erfasst. In der Auswahlliste von "Marc" sind entsprechend in der Auswahlliste in indizierter Reihenfolge an Position 1 "Matt", an Position 2 "Ruby" und an Position 3 "Tom" erfasst. Die Auswahllisten von "Tom" beziehungsweise "Marc" seitens des Netzknotens (IMPS-Server) sind vorteilhafterweise unter Nutzung eines Nachrichtendienstes des Mobilfunknetzes von dem jeweiligen mobilen Endgerät 6 beziehungsweise 7 einrichtbar beziehungsweise administrierbar.

Im Rahmen der Übermittlung einer Nachricht von dem mobilen Endgerät 6 von "Tom" an "Marc" sendet "Tom" unter Verwendung der Kontaktinformation "xx002" eine Nachricht an das Telekommunikationsnetz, vorliegend an eine für den entsprechenden Nachrichtendienst eingerichtete und/oder ausgebildete Vermittlungseinrichtung (SMSC) des Mobilfunknetzes 1. Die dabei von dem mobilen Endgerät 6 an das Kommunikationsnetz, vorliegend das Mobilfunknetz 1, gesendete Nachricht besteht dabei aus der Kontaktinformation "xx002" und dem zu übermittelnden Nachrichteninhalt.

Seitens der Vermittlungseinrichtung (SMSC) wird anhand der Information zur Adressierung des Nachrichtendienstes, vorliegend die ersten beiden Ziffern "xx" der Kontaktinformation "xx002" erkannt, welcher Nachrichtendienst seitens des Telekommunikationsnetzes, also dem Mobilfunknetz 1, zu nutzen ist. Die Information "xx" zur Adressierung des Nachrichtendienstes ist dabei spezifisch für das jeweilige Telekommunikationsnetz und kann daher in unterschiedlichen Telekommunikationsnetzen auch andere Ziffern aufweisen beziehungsweise annehmen. Bedarfsweise erfolgt von Telekommunikationsnetz zu Telekommunikationsnetz vorteilhafterweise eine Anpassung der Dienste an die jeweilige Adressierung. Anhand der indizierten Information zur Bestimmung des Nachrichtenempfängers "002" der Kontaktinformation "xx002" wird von der Vermittlungseinrichtung der für den entsprechenden Nachrichtendienst zuständige beziehungsweise eingerichtete Netzknoten bezüglich der Auswahlliste bevorzugter Kommunikationspartner abgefragt. Anhand der indizierten Information des Nachrichtenempfängers, vorliegend der "002" ist seitens der Auswahlliste erkennbar, dass der zweite Eintrag in der entsprechenden Auswahlliste, vorliegend also "Marc" den Nachrichteninhalt zugestellt bekommen soll. Seitens der Vermittlungseinrichtung und/oder des dazu eingerichteten Netzknotens des Mobilfunknetzes wird im Rahmen der Nachrichtenübermittlung anhand der mit der Kontaktinformation und dem Nachrichteninhalt übersandten Rufnummer, vorliegend der MSISDN des mobilen Endgerätes 6 von "Tom" die entsprechende Auswahlliste von "Tom" ausgewählt.

In der Auswahlliste ist seitens des Netzknotens, vorliegend dem sogenannten IMPS-Dienst, in der für "Marc" vorgesehenen Eintragung an der zweiten Position entsprechend der indizierten Nachrichtenempfängerinformation "002" festgehalten, wie und/oder ob "Marc" bezüglich des Nachrichtenempfangs in einem Telekommunikationsnetz erreichbar ist. Befindet sich "Marc" in dem Mobilfunknetz 1, ist seitens der Auswahlliste des IMPS für "Tom" in der zweiten indizierten, für "Marc" vorgesehenen Position die MSISDN des mobilen Endgerätes 7 von "Marc" erfasst. Befindet sich "Marc" in einem anderen Telekommunikationsnetz, beispielsweise in dem über den Dienst des Diensteanbieters SP-A erreichbaren Internet 3, so ist in der Auswahlliste von "Tom" in der zweiten, für "Marc" vorgesehenen Eintragung beispielsweise eine E-Mail-Adresse oder dergleichen Adressierungsinformation von "Marc" in dem entsprechenden Telekommunikationsnetz 3 erfasst.

Eine entsprechende Nachrichtenübermittlung erfolgt von dem mobilen Endgerät 7 von "Marc" mit "Tom" als Nachrichtenempfänger. Dabei Im Rahmen der Übermittlung einer Nachricht von dem mobilen Endgerät 7 von "Marc" an "Tom" sendet "Marc" unter Verwendung der Kontaktinformation "xx003" eine Nachricht an das Telekommunikationsnetz, vorliegend an eine für den entsprechenden Nachrichtendienst eingerichtete und/oder ausgebildete Vermittlungseinrichtung (SMSC) des Mobilfunknetzes 1. Die dabei von dem mobilen Endgerät 7 an das Kommunikationsnetz, vorliegend das Mobilfunknetz 1, gesendete Nachricht besteht dabei aus der Kontaktinformation "xx003" und dem zu übermittelnden Nachrichteninhalt.

Seitens der Vermittlungseinrichtung (SMSC) wird anhand der Information zur Adressierung des Nachrichtendienstes, vorliegend die ersten beiden Ziffern "xx" der Kontaktinformation "xx003" erkannt, welcher Nachrichtendienst seitens des Telekommunikationsnetzes, also dem Mobilfunknetz 1, zu nutzen ist. Anhand der indizierten Information zur Bestimmung des Nachrichtenempfängers "003" der Kontaktinformation "xx003" wird von der Vermittlungseinrichtung der für den entsprechenden Nachrichtendienst zuständige beziehungsweise eingerichtete Netzknoten bezüglich der Auswahlliste bevorzugter Kommunikationspartner abgefragt. Anhand der indizierten Information des Nachrichtenempfängers, vorliegend der "003" ist seitens der Auswahlliste erkennbar, dass der zweite Eintrag in der entsprechenden Auswahlliste, vorliegend also "Tom" den Nachrichteninhalt zugestellt bekommen soll. Seitens der Vermittlungseinrichtung und/oder des dazu eingerichteten Netzknotens des Mobilfunknetzes wird im Rahmen der Nachrichtenübermittlung anhand der mit der Kontaktinformation und dem Nachrichteninhalt übersandten Rufnummer, vorliegend der MSISDN des mobilen Endgerätes 7 von "Marc" die entsprechende Auswahlliste von "Marc" ausgewählt.

In der Auswahlliste ist seitens des Netzknotens, vorliegend dem sogenannten IMPS-Dienst, in der für "Tom" vorgesehenen Eintragung an der dritten Position entsprechend der indizierten Nachrichtenempfängerinformation "003" festgehalten, wie und/oder ob "Tom" bezüglich des Nachrichtenempfangs in einem Telekommunikationsnetz erreichbar ist. Befindet sich "Tom" in dem Mobilfunknetz 1, ist seitens der Auswahlliste des IMPS-Dienstes für "Marc" in der dritten indizierten, für "Tom" vorgesehenen Position die MSISDN des mobilen Endgerätes 6 von "Tom" erfasst. Befindet sich "Tom" in einem anderen Telekommunikationsnetz, beispielsweise in dem über den Dienst des Diensteanbieters SP-A erreichbaren Internet 3, so ist in der Auswahlliste von "Marc" in der dritten, für "Tom" vorgesehenen Eintragung beispielsweise eine E-Mail-Adresse oder dergleichen Adressierungsinformation von "Tom" in dem entsprechenden Telekommunikationsnetz 3 erfasst.

Die in den Figuren der Zeichnung dargestellten und in dem Zusammenhang mit diesen beschriebenen Ausführungsbeispiele der Erfindung dienen lediglich der Erläuterung der Erfindung und sind für diese nicht beschränkend.

### Bezugszeichenliste:

- 1: Mobilfunknetz
- 2: Nachrichtensofortversanddienst
- 3: Telekommunikationsnetz (Internet)
- 4: Nachrichtenübermittlung
- 5: Netzkopplung
- 6: mobiles Endgerät/Mobilfunktelefon
- 7: mobiles Endgerät/Mobilfunktelefon
- MN-A: Mobilfunknetzbetreiber (Mobilfunknetz (1))
- MN-B: Mobilfunknetzbetreiber
- MN-C: Mobilfunknetzbetreiber
- PLMN: öffentliches landgestütztes Mobilfunknetz
- SP-A: Diensteanbieter (Internet (3))
- SP-B: Diensteanbieter (Internet)
- SP-C: Diensteanbieter (Internet)
- SP-D: Diensteanbieter (Internet)
- SP-E: Diensteanbieter (Internet)
- SP-F: Diensteanbieter (Internet)
- SMSC: Vermittlungseinrichtung (Mobilfunknetz (1))
- IMPS: Instant Messaging and Presence Service/Netzknoten (Mobilfunknetz (1))

## Patentansprüche

1. Verfahren zur Übermittlung von Nachrichten in Telekommunikationsnetzen (1, 3),
unter Beteiligung wenigstens eines Netzknotens in einem Mobilfunknetz (1) mittels eines Nachrichtendienstes des Mobilfunknetzes (1),
wobei
der wenigstens eine Netzknoten des Mobilfunknetzes (1)
für wenigstens einen ein in dem Mobilfunknetz (1) betreibbares Endgerät (6, 7) nutzenden Nachrichtensender (6, 7) wenigstens eine Auswahlliste bevorzugter Empfänger (6, 7) von Nachrichten des Nachrichtensenders (6, 7) aufweist,
in der für jeden Nachrichtenempfänger (6, 7) wenigstens eine Kontaktinformation des Nachrichtenempfängers (6, 7) in dem Mobilfunknetz (1) und/oder einem anderen Telekommunikationsnetz (3) erfasst ist,
wobei
der Netzknoten eine Nachricht empfängt,
**dadurch gekennzeichnet, dass**
die Nachricht die den Nachrichtensender (6, 7) in dem Mobilfunknetz (1) eindeutig identifizierende Rufnummer MSISDN,
einen Nachrichteninhalt,
eine Information zur Adressierung des Nachrichtendienstes des Mobilfunknetzes (1) und
eine indizierte Information,
anhand der der Nachrichtenempfänger (6, 7) seitens des Netzknotens bestimmbar ist,
aufweist,
seitens des Netzknotens anhand der Adressierungsinformation der Nachrichtendienst des Mobilfunknetzes (1) für die Nachrichtenübertragung ausgewählt wird,
seitens des Netzknotens anhand der den Nachrichtensender (6, 7) in dem Mobilfunknetz (1) eindeutig identifizierenden Rufnummer MSISDN die zu verwendende Auswahlliste bevorzugter Nachrichtenempfänger (6, 7) ausgewählt wird,
in der jeweils für einen Nachrichtenempfänger (6, 7) von Nachrichten des Nachrichtensenders festgehalten ist, wie der Nachrichtenempfänger bezüglich des Nachrichtenempfangs in dem Mobilfunknetz (1) und/oder einem anderen Telekommunikationsnetz (3) erreichbar ist, wozu eine den Nachrichtenempfängär (6, 7) in dem Mobilfunknetz (1) und/oder einem anderen Telekommunikationsnetz (3) eindeutig identifizierende Kontaktinformation erfasst ist,
seitens des Netzknotens anhand der Indizierungsinformation aus der Auswahlliste entsprechend der Indizierung die Kontaktinformation des Nachrichtenempfängers (6, 7) in dem Mobilfunknetz (1) und/oder in einem anderen Telekommunikationsnetz (3) bestimmt wird
und
der Netzknoten wenigstens den Nachrichteninhalt an den anhand der Indizierungsinformation aus der Auswahlliste bestimmten Nachrichtenempfänger (6, 7) sendet

2. Verfahren nach Anspruch 1, **gekennzeichnet durch** ein Mobilfunknetz gemäß einem Global System for Mobile Communications (GSM-) Funknetzstandard, General Packet Radio Service (GPRS-) Funknetzstandard und/oder einem Universal Mobile Telecommunications System (UMTS-) Funknetzstandard.

3. Verfahren nach Anspruch 1 oder Anspruch 2, **dadurch gekennzeichnet, dass** der Netzknoten zusätzlich zum Nachrichteninhalt die den Nachrichtensender (6, 7) in dem Mobilfunknetz (1) identifizierende Rufnummer MSISDN an den bestimmten Nachrichtenempfänger (6, 7) sendet.

4. Verfahren nach einem der Ansprüche 1 bis 3, **dadurch gekennzeichnet, dass** die Kontaktinformation eine den Nachrichtenempfänger (6, 7) in dem Mobilfunknetz (1) eindeutig identifizierende Rufnummer MSISDN des Nachrichtenempfängers (6, 7) In dem Mobilfunknetz (1) ist.

5. Verfahren nach einem der Ansprüche 1 bis 4, **dadurch gekennzeichnet, dass** die Adressierungsinformation und die Indizierungsinformation jeweils aus wenigstens einem Zeichen bestehen.

6. Verfahren nach Anspruch 5, **dadurch gekennzeichnet, dass** die Adressierungsinformation und die Indizierungsinformation jeweils aus zwei Zeichen bestehen.

7. Verfahren nach einem der Ansprüche 1 bis 6, **dadurch gekennzeichnet, dass** die Adressierungsinformation und/oder die Indizierungsinformation aus arabischen Ziffern zusammengesetzt sind.

8. Verfahren nach einem der Ansprüche 1 bis 7, **gekennzeichnet durch** Indizierungsinformationen fortlaufender Zahlen in der Auswahlliste.

9. Verfahren nach einem der Ansprüche 1 bis 8, **dadurch gekennzeichnet, dass** seitens des Mobilfunknetzes (1) wenigstens eine Einrichtung vorgesehen ist, welche wenigstens einen Erreichbarkeitszustand wenigstens eines bevorzugten Nachrichtenempfängers (6, 7) der wenigstens einen Auswahlliste in dem Mobilfunknetz (1) und/oder einem anderen Telekommunikationsnetz (3) erfasst.

10. Verfahren nach Anspruch 9, **dadurch gekennzeichnet, dass** der wenigstens eine Erreichbarkeitszustand des wenigstens einen bevorzugten Nachrichtenempfängers (6, 7) der wenigstens einen Auswahlliste seitens des Endgerätes des Nachrichtensenders (6, 7) signalisiert wird.

11. Verfahren nach Anspruch 9, **dadurch gekennzeichnet, dass** der wenigstens eine Erreichbarkeitszustand des wenigstens einen bevorzugten Nachrichtenempfängers (6, 7) der wenigstens einen Auswahlliste seitens des Endgerätes des Nachrichtensenders (6, 7) mit und/oder in der Auswahlliste signalisiert wird.

12. Netzknoten in einem Telekommunikationsnetz (1, 3), welcher an der Übermittlung von Nachrichten in Telekommunikationsnetzen (1, 3) mittels eines Nachrichtendienstes eines Mobilfunknetzes (1) beteiligt ist und
welcher
für wenigstens einen Nachrichtensender (6, 7)
wenigstens eine Auswahlliste bevorzugter Nachrichtenempfänger (6, 7) aufweist,
in der für jeden Nachrichtenempfänger (6, 7) wenigstens eine Kontaktinformation des Nachrichtenempfängers (6, 7) in dem Mobilfunknetz (1) und/oder in einem anderen Telekommunikationsnetz (3) erfasst ist,
**dadurch gekennzeichnet,**
**dass**
die Auswahlliste seitens des Netzknotens unter Nutzung einer den Nachrichtensender (6, 7) in dem Mobilfunknetz (1) eindeutig identifizierenden Rufnummer MSISDN des Nachrichtensenders bestimmbar und auswählbar ist, und
die Kontaktinformation
als eine den Nachrichtenempfänger (6, 7) in dem Mobilfunknetz (1) und/oder in einem anderen Telekommunikationsnetz (3) eindeutig identifizierende Kontaktinformation
zur Nachrichtenübermittlung an den Nachrichtenempfänger (6, 7) im Telekommunikationsnetz (1, 3) nutzbar ist und
indiziert oder mit einer indizierten Information
in der Auswahlliste erfasst ist,
wobei der Netzknoten ausgebildet ist, anhand einer zusammen mit einer zu übermittelnden Nachricht empfangenen, in einer Kontaktinformation enthaltenen Indizierungsinformation die in einer Auswahlliste erfasste Kontaktinformation eines Nachrichtenempfängers zu bestimmen,
und wobei der Netzknoten ausgebildet ist, in der Auswahlliste festzuhalten, wie ein Nachrichtenempfänger bezüglich des Nachrichtenempfangs in dem Mobilfunknetz (1) und/oder in einem anderen Telekommunikationsnetz (3) erreichbar ist.

13. Netzknoten nach Anspruch 12, **dadurch gekennzeichnet, dass** die Indizierung durch die Position des Eintrags der Kontaktinformation in der Auswahlliste gegeben ist.

14. Netzknoten nach Anspruch 12, **dadurch gekennzeichnet, dass** die Indizierungsinformation aus wenigstens einem Zeichen besteht.

15. Netzknoten nach Anspruch 12 oder Anspruch 13, **dadurch gekennzeichnet, dass** die Indizierungsinformation aus mindestens zwei Zeichen besteht.

16. Netzknoten nach einem der Ansprüche 12 bis 14, **dadurch gekennzeichnet, dass** die Indizierungsinformation aus arabischen Ziffern zusammengesetzt ist.

17. Netzknoten nach einem der Ansprüche 12 bis 15, **gekennzeichnet durch** Indizierungsinformationen fortlaufender Zahlen.

18. Netzknoten nach einem der Ansprüche 12 bis 17, **dadurch gekennzeichnet, dass** die Kontaktinformation wenigstens die Rufnummer MSISDN des Nachrichtenempfängers (6, 7) in dem Mobilfunknetz (1) ist.

19. Netzknoten nach einem der Ansprüche 12 bis 18, **gekennzeichnet durch** eine die Auswahlliste verwaltende Speichereinheit.

20. Netzknoten nach einem der Ansprüche 12 bis 19, **gekennzeichnet durch** eine die Auswahlliste zur Nachrichtenübermittlung nutzende Nachrichtenverarbeitungseinheit, aufweisend einen Prozessor und wenigstens eine Speichereinheit.

21. Netzknoten nach einem der Ansprüche 12 bis 20, **dadurch gekennzeichnet, dass** dieser eine Vermittlungseinrichtung für den Nachrichtendienst des Mobilfunknetzes (1) ist.

22. Netzknoten nach einem der Ansprüche 12 bis 20, **dadurch gekennzeichnet, dass** dieser eine Servereinrichtung für den Nachrichtendienst des Mobilfunknetzes (1) ist.

23. Verfahren zur Übermittlung von Nachrichten in Telekommunikationsnetzen (1, 3) von einem in einem Mobilfunknetz (1) betreibbaren Endgerät (6, 7) als Nachrichtensender an einen Nachrichtenempfänger in dem Mobilfunknetz (1) und/oder in einem anderen Telekommunikationsnetz (3)
mittels eines Nachrichtendienstes des Mobilfunknetzes (1),
wobei
das Endgerät (6, 7) des Nachrichtensenders eine Auswahlliste bevorzugter Nachrichtenempfänger (6, 7) aufweist, in der für jeden Nachrichtenempfänger (6, 7) wenigstens eine Kontaktinformation des Nachrichtenempfängers (6, 7) erfasst ist,
das in dem Mobitfunknetz (1) betreibbare Endgerät (6, 7) unter Verwendung der Kontaktinformation des Nachrichtenempfängers eine Nachricht und wenigstens eine den Nachrichtensender in dem Mobilfunknetz (1) eindeutig identifizierende Rufnummer MSISDN an das Mobilfunknetz (1) sendet,
wobei die Nachricht
wenigstens die Kontaktinformation des Nachrichtenempfängers (ei, 7) und einen Nachrichteninhalt aufweist,
**dadurch gekennzeichnet,**
**dass**
die Kontaktinformation aus
einer Information zur Adressierung des Nachrichtendienstes des Mobilfunknetzes (1) und
einer indizierten Information,
anhand der der Nachrichtenempfänger (6, 7) mittels einer der den Nachrichtensender eindeutig identifizierenden Rufnummer MSISDN zugeordneten Auswahlliste seitens eines Netzknotens des Mobiffunknetzes (1) identifizierbar ist,
besteht,
wobei die Adressierungsinformation den für die Nachrichtenübermittlung zu verwendenden Nachrichtendienst des Mobilfunknetzes (1) signalisiert und
die indizierte Information genutzt wird, um seitens des Netzknotens zu bestimmen, wie der Nachrichtenempfänger bezüglich des Nachrichtenempfangs in dem Mobilfunknetz und/oder einem anderen Telekommunikationsnetz (1, 3) erreichbar ist.

24. Verfahren nach Anspruch 23, **dadurch gekennzeichnet, dass** die Kontaktinformation insgesamt aus wenigstens zwei Zeichen besteht, wenigstens einem Zeichen für die Adressierungsinformation und wenigstens einem Zeichen für die Indizierungsinformation.

25. Verfahren nach Anspruch 23 oder Anspruch 24, **dadurch gekennzeichnet, dass** die Kontaktinformation aus mindestens vier Zeichen besteht, mindestens zwei Zeichen für die Adressierungsinformation und mindestens zwei Zeichen für die Indizierungsinformation.

26. Verfahren nach einem der Ansprüche 23 bis 25, **dadurch gekennzeichnet, dass** die Kontaktinformation, die Adressierungsinformation und/oder die Indizierungsinformation aus arabischen Ziffern zusammengesetzt werden.

## Claims

1. A method for the transmission of messages in telecommunication networks (1, 3),
with contribution of at least one network node in a mobile radio network (1)
by means of a message service of
the mobile radio network (1),
wherein
the at least one network node of the mobile radio network (1)
comprises at least one selection list of preferred receivers (6, 7) of messages from a message sender (6, 7) for the at least one message sender (6, 7) who uses a terminal (6, 7) that can be operated in the mobile radio network (1),
in which selection list at least one contact information item of the message receiver (6, 7) in the mobile radio network (1) and/or another telecommunication network (3) is gathered for every message receiver (6, 7),
wherein
the network node receives a message,
**characterized in that**
the message comprises the call number MSISDN which unequivocally identifies the message sender (6, 7) in the mobile radio network (1),
a message content, , an information item for addressing the message service of the mobile radio network (1) and
an indexed information item,
by means of which the message receiver (6, 7) can be determined by the network node,
the network node will select the message service of the mobile radio network (1) for the message transmission by means of the addressing information item,
the network node will select the selection list of preferred message receivers (6, 7) to be used by means of the call number MSISDN which unequivocally identifies the message sender (6, 7) in the mobile radio network (1),
in which selection list it is determined respectively for one message receiver (6, 7) of messages from the message sender how the message receiver can be reached with respect to the message reception in the mobile radio network (1) and/or another telecommunication network (3), for which purpose a contact information item which unequivocally identifies the message receiver (6, 7) in the mobile radio network (1) and/or another telecommunication network (3) is gathered,
the network node determines the contact information item of the message receiver (6, 7) in the mobile radio network (1) and/or another telecommunication network (3) by means of the indexing information item from the selection list in correspondence to the indexing
and
the network node sends at least the message content to the message receiver (6, 7) determined from the selection list by means of the indexing information item.

2. A method according to claim 1, **characterized by** a mobile radio network according to a Global System for Mobile Communications (GSM) radio network standard, General Packet Radio Service (GPRS) radio network standard and/or a Universal Mobile Telecommunications System (UMTS) radio network standard.

3. A method according to claim 1 or claim 2, **characterized in that** the network node sends the call number MSISD which identifies the message sender (6, 7) in the mobile radio network (1) in addition to the message content to the determined message receiver (6, 7).

4. A method according to one of the claims 1 through 3, **characterized in that** the contact information item is a call number MSISDN of the message receiver (6, 7) in the mobile radio network (1), which call number MSISDN unequivocally identifies the message receiver (6, 7) in the mobile radio network (1).

5. A method according to one of the claims 1 through 4, **characterized in that** the addressing information item and the indexing information item are each composed of at least one character.

6. A method according to claim 5, **characterized in that** the addressing information item and the indexing information item are each composed of two characters.

7. A method according to one of the claims 1 through 6, **characterized in that** the addressing information item and the indexing information item are composed of Arabic numerals.

8. A method according to one of the claims 1 through 7, **characterized by** indexing information of consecutive numbers in the selection list.

9. A method according to one of the claims 1 through 8, **characterized in that** the mobile radio network (1) provides at least one device which gathers at least one within call state of at least one preferred message receiver (6, 7) of the at least one selection list in the mobile radio network (1) and/or another telecommunication network (3).

10. A method according to claim 9, **characterized in that** the at least one within call state of the at least one preferred message receiver (6, 7) of the at least one selection list is signalized by the terminal of the message sender (6, 7).

11. A method according to claim 9, **characterized in that** the at least one within call state of the at least one preferred message receiver (6, 7) of the at least one selection list is signalized by the terminal of the message sender (6, 7) with and/or in the selection list.

12. A network node in a telecommunication network (1, 3) which is involved in the transmission of messages in telecommunication networks (1, 3) by means of a message service of a mobile radio network (1) and
which
comprises at least one selection list of preferred message receivers (6, 7)
for at least one message sender (6, 7),
in which selection list at least one contact information item of the message receiver (6, 7) in the mobile radio network (1) and/or in another telecommunication network (3) is gathered for each message receiver (6, 7),
**characterized in**
**that**
the network node is able to determine and to select the selection list while using one call number MSISDN of the message sender which unequivocally identifies the message sender (6, 7) in the mobile radio network (1),
and
the contact information item
can be used as a contact information item which unequivocally identifies the message receiver (6, 7) in the mobile radio network (1) and/or in another telecommunication network (3)
for the message transmission to the message receiver (6, 7) in the telecommunication network (1, 3) and
is indexed or gathered in the selection list with an indexed information item,
wherein the network node is configured to determine the contact information item of a message receiver gathered in a selection list by means of an indexing information item contained in a contact information item which is received together with a message to be transmitted,
and wherein the network node is configured to record in the selection list how a message receiver can be reached with respect to the message reception in the mobile radio network (1) and/or in another telecommunication network (3).

13. A network node according to claim 12, **characterized in that** the indexing is realized by the position of the entry of the contact information item in the selection list.

14. A network node according to claim 12, **characterized in that** the indexing information item is composed of at least one character.

15. A network node according to claim 12 or claim 13, **characterized in that** the indexing information item is composed of at least two characters.

16. A network node according to one of the claims 12 through 14, **characterized in that** the indexing information item is composed of Arabic numerals.

17. A network node according to one of the claims 12 through 15, **characterized by** indexing information of consecutive numbers.

18. A network node according to one of the claims 12 through 17, **characterized in that** the contact information item is at least the call number MSISDN of the message receiver (6, 7) in the mobile radio network (1).

19. A network node according to one of the claims 12 through 18, **characterized by** a memory unit which administrates the selection list.

20. A network node according to one of the claims 12 through 19, **characterized by** a message processing unit which uses the selection list for the message transmission and comprises a processor and at least one memory unit.

21. A network node according to one of the claims 12 through 20, **characterized in that** this one is a switchboard device for the message service of the mobile radio network (1).

22. A network node according to one of the claims 12 through 20, **characterized in that** this one is a server device for the message service of the mobile radio network (1).

23. A method for the transmission of messages in telecommunication networks (1, 3) from a terminal (6, 7) which can be operated in a mobile radio network (1) as message sender to a message receiver in the mobile radio network and/or another telecommunication network (3)
by means of a message service of the mobile radio network (1), wherein
the terminal (6, 7) of the message sender comprises a selection list of preferred message receivers (6, 7), in which list at least one contact information item of the message receiver (6, 7) is gathered for each message receiver (6, 7),
the terminal (6, 7) which can be operated in the mobile radio network (1) sends a message and at least one call number MSISDN which unequivocally identifies the message sender in the mobile radio network (1) to the mobile radio network (1) while using the contact information item of the message receiver,
wherein the message
comprises at least the contact information item of the message receiver (6, 7) and a message content,
**characterized in**
**that**
the contact information item is composed of
an information item for addressing the message service of the mobile radio network (1) and
an indexed information item,
by means of which the message receiver (6, 7) can be identified by a network node of the mobile radio network (1) by means of a selection list which is allocated to the call number MSISDN which unequivocally identifies the message sender,
wherein the addressing information item signalizes the message service of the mobile radio network (1) to be used for the message transmission and
the indexed information item is used for determining by means of the network node how the message receiver can be reached with respect to the message reception in the mobile radio network (1) and/or another telecommunication network (1, 3).

24. A method according to claim 23, **characterized in that** the contact information item is in total composed of at least two characters, at least one character for the addressing information item and at least one character for the indexing information item.

25. A method according to claim 23 or claim 24, **characterized in that** the contact information item is composed of at least four characters, at least two characters for the addressing information item and at least two characters for the indexing information item.

26. A method according to one of the claims 23 through 25, **characterized in that** the contact information item, the addressing information item and/or the indexing information item are composed of Arabic numerals.

## Revendications

1. Procédé de transmission de messages dans des réseaux de télécommunication (1, 3)
avec contribution d'au moins un noeud dans un réseau radio mobile (1) par moyen d'un service de messages du
réseau radio mobile (1),
dans lequel
l'au moins un noeud du réseau radio mobile (1)
comprend
au moins une liste de sélection des récepteurs préférés (6, 7) des messages d'un émetteur de messages pour au moins l'un émetteur de messages qui utilise un terminal (6, 7) opérable dans le réseau radio mobile (1),
au moins une information de contact du récepteur de messages (6, 7) dans le réseau radio mobile (1) et/ou dans un autre réseau de télécommunications (3) étant enregistrée dans la liste de sélection pour chaque récepteur de messages (6, 7),
dans lequel
le noeud reçoit un message,
**caractérisé en ce que**
le message comprend le numéro d'appel MSISDN qui identifie sans équivoque l'émetteur de messages (6, 7) dans le réseau radio mobile (1), un contenu de message,
une information pour adresser le service de messages du réseau radio mobile (1) et
une information indexée,
par moyen de laquelle le noeud peut déterminer le récepteur de messages (6, 7),
le noeud sélectionne le service de messages du réseau radio mobile (1) pour la transmission de messages à l'aide de l'information d'adressage,
le noeud sélectionne la liste de sélection des récepteurs de messages préférés (6, 7) à utiliser par l'intermédiaire du numéro d'appel MSISDN qui identifie sans équivoque l'émetteur de messages (6, 7) dans le réseau radio mobile (1),
et dans la liste de sélection il est déterminé respectivement pour un récepteur de messages (6, 7) des messages de l'émetteur de messages comment le récepteur de messages est accessible par rapport à la réception des messages dans le réseau radio mobile (1) et/ou dans un autre réseau de télécommunications (3), à quelle fin une information de contact qui identifie sans équivoque le récepteur de messages (6, 7) dans le réseau radio mobile (1) et/ou dans un autre réseau de télécommunications (3) est enregistrée,
le noeud détermine l'information de contact du récepteur de messages. (6, 7) dans le réseau radio mobile (1) et/ou dans un autre réseau de télécommunications (3) par moyen de l'information d'indexage dans la liste de sélection en accord avec l'indexage
et
le noeud envoie au moins le contenu de message au récepteur de messages (6, 7) déterminé à l'aide de l'information d'indexage dans la liste de sélection.

2. Procédé selon la revendication 1, **caractérisé par** un réseau radio mobile selon un standard de réseau radio dénommé Global System for Mobile Communications (GSM), un standard de réseau radio dénommé General Packet Radio Service (GPRS) et/ou un standard de réseau radio dénommé Universal Mobile Telecommunications Systems (UMTS).

3. Procédé selon la revendication 1 ou la revendication 2, **caractérisé en ce que** le noeud envoie, à côté du contenu de message, le numéro d'appel MSISDN qui identifie l'émetteur de messages (6, 7) dans le réseau radio mobile (1) au récepteur de messages (6, 7) déterminé.

4. Procédé selon l'une des revendications 1 à 3, **caractérisé en ce que** l'information de contact est un numéro d'appel MSISDN du récepteur de messages (6, 7) dans le réseau radio mobile (1), le numéro d'appel MSISDN identifiant sans équivoque le récepteur de messages (6, 7) dans le réseau radio mobile (1).

5. Procédé selon l'une des revendications 1 à 4, **caractérisé en ce que** l'information d'adressage et l'information d'indexage sont chacune composées d'au moins un caractère.

6. Procédé selon la revendication 5, **caractérisé en ce que** l'information d'adressage et l'information d'indexage sont chacune composées de deux caractères.

7. Procédé selon l'une des revendications 1 à 6, **caractérisé en ce que** l'information d'adressage et/ou l'information d'indexage sont composées des chiffres arabes.

8. Procédé selon l'une des revendications 1 à 7, **caractérisé par** des informations d'indexage des nombres consécutifs dans la liste de sélection.

9. Procédé selon l'une des revendications 1 à 8, **caractérisé en ce que** le réseau radio mobile (1) prévoit au moins un dispositif qui saisit au moins un état d'accessibilité d'au moins un récepteur de messages (6, 7) préféré de l'au moins une liste de sélection dans le réseau radio mobile (1) et/ou dans un autre réseau de télécommunications (3).

10. Procédé selon la revendication 9, **caractérisé en ce que** l'au moins un état d'accessibilité de l'au moins un récepteur de messages (6, 7) préféré de l'au moins une liste de sélection est signalé par le terminal de l'émetteur de messages (6, 7).

11. Procédé selon la revendication 9, **caractérisé en ce que** l'au moins un état d'accessibilité de l'au moins un récepteur de messages (6, 7) préféré de l'au moins une liste de sélection est signalé par le terminal de l'émetteur de messages (6, 7) avec et/ou dans la liste de sélection.

12. Noeud dans un réseau de télécommunications (1, 3) qui contribue à la transmission de messages dans des réseaux de télécommunications (1, 3) par moyen d'un service de messages d'un réseau radio mobile (1) et
qui
comprend au moins une liste de sélection des récepteurs de messages (6, 7) préférés
pour au moins un émetteur de messages (6, 7),
au moins une information de contact du récepteur de messages (6, 7) dans le réseau radio mobile (1) et/ou dans un autre réseau de télécommunications (3) étant enregistrée dans la liste de sélection pour chaque récepteur de messages (6, 7),
**caractérisé en ce**
**que**
le noeud peut déterminer et sélectionner la liste de sélection en utilisant un numéro d'appel MSISDN de l'émetteur de messages qui identifie sans équivoque l'émetteur de messages (6, 7) dans le réseau radio mobile (1), et
l'information de contact
peut être utilisée en tant qu'une information de contact identifiant sans équivoque le récepteur de messages (6, 7) dans le réseau radio mobile (1) et/ou dans un autre réseau de télécommunications (3)
pour la transmission de messages au récepteur de messages (6, 7) dans le réseau de télécommunications (1, 3) et
elle est indexée ou enregistrée dans la liste de sélection avec une information indexée,
le noeud étant configuré pour déterminer l'information de contact d'un récepteur de messages enregistrée dans une liste de sélection par moyen d'une information d'indexage contenue dans une information de contact reçue ensemble avec un message à transmettre,
et le noeud étant configuré pour retenir dans la liste de sélection comment un récepteur de messages est accessible par rapport à la réception de messages dans le réseau radio mobile (1) ou dans un autre réseau de télécommunications (3).

13. Noeud selon la revendication 12, **caractérisé en ce que** l'indexage est donné par la position de l'entrée de l'information de contact dans la liste de sélection.

14. Noeud selon la revendication 12, **caractérisé en ce que** l'information d'indexage est composée d'au moins un caractère.

15. Noeud selon la revendication 12 ou la revendication 13, **caractérisé en ce que** l'information d'indexage est composée d'au moins deux caractères.

16. Noeud selon l'une des revendications 12 à 14, **caractérisé en ce que** l'information d'indexage est composée de chiffres arabes.

17. Noeud selon l'une des revendications 12 à 15, **caractérisé par** des informations d'indexage des nombres consécutifs.

18. Noeud selon l'une des revendications 12 à 17, **caractérisé en ce que** l'information de contact est au moins le numéro d'appel MSISDN du récepteur de messages (6, 7) dans le réseau radio mobile (1).

19. Noeud selon l'une des revendications 12 à 18, **caractérisé par** une unité de mémoire administrant la liste de sélection.

20. Noeud selon l'une des revendications 12 à 19, **caractérisé par** une unité de traitement de messages qui utilise la liste de sélection pour la transmission de messages et qui comprend un processeur et au moins une unité de mémoire.

21. Noeud selon l'une des revendications 12 à 20, **caractérisé en ce que** celui-ci est un dispositif de commutation pour le service de messages du réseau radio mobile (1).

22. Noeud selon l'une des revendications 12 à 20, **caractérisé en ce que** celui-ci est un dispositif de serveur pour le service de messages du réseau radio mobile (1).

23. Procédé de transmission des messages dans des réseaux de télécommunications (1, 3) à partir d'un terminal (6, 7) opérable dans un réseau radio mobile (1) en tant que émetteur de messages à un récepteur de messages dans le réseau radio mobile (1) et/ou dans un autre réseau de télécommunications (3)
par moyen d'un service de messages du réseau radio mobile (1), dans lequel
le terminal (6, 7) de l'émetteur de messages comprend une liste de sélection des récepteurs de messages (6, 7) préférés, dans laquelle au moins une information de contact du récepteur de messages (6, 7) est enregistrée pour chaque récepteur de messages (6, 7),
le terminal (6, 7) opérable dans le réseau radio mobile (1) envoie un message et au moins un numéro d'appel MSISDN qui identifie sans équivoque l'émetteur de messages dans le réseau radio mobile (1) au réseau radio mobile (1) en utilisant l'information de contact du récepteur de messages,
le message
comprenant au moins l'information de contact du récepteur de messages (6, 7) et un contenu de message,
**caractérisé en ce**
**que**
l'information de contact est composée d'
une information pour adresser le service de messages du réseau radio mobile (1) et
une information indexée,
par moyen de laquelle le récepteur de messages (6, 7) peut être identifié par un noeud du réseau radio mobile (1) à l'aide d'une liste de sélection qui est attribuée à un numéro d'appel MSISDN qui identifie sans équivoque l'émetteur de messages,
dans lequel l'information d'adressage signale le service de messages du réseau radio mobile (1) à utiliser pour la transmission de messages et l'information indexée est utilisée pour déterminer par moyen du noeud comment le récepteur de messages est accessible par rapport à la réception de messages dans le réseau radio mobile et/ou dans un autre réseau de télécommunications (1, 3).

24. Procédé selon la revendication 23, **caractérisé en ce que** l'information de contact est en tout composée d'au moins deux caractères, au moins un caractère for l'information d'adressage et au moins un caractère pour l'information d'indexage.

25. Procédé selon la revendication 23 ou la revendication 24, **caractérisé en ce que** l'information de contact est composée d'au moins quatre caractères, au moins deux caractères pour l'information d'adressage et au moins deux caractères pour l'information d'indexage.

26. Procédé selon l'une des revendications 23 à 25, **caractérisé en ce que** l'information de contact, l'information d'adressage et/ou l'information d'indexage sont composées des chiffres arabes.
